# FASCICULE DE BREVET EUROPEEN

(11) **EP 0 859 312 B1**
(45) Date de publication et mention de la délivrance du brevet: **02.05.2002**
(21) Numéro de dépôt: 98400342.6
(22) Date de dépôt: 13.02.1998
(51) Int. Cl.: G06F 7/00, H04L 29/06

(54) **Procédé d'utilisation en réseau d'un processeur de logique floue, et processeur de logique floue utilisable en réseau**
Verfahren zur Benutzung eines Fuzzy-Logic-Prozessors in einem Netzwerk und dafür geeigneter Fuzzy-Logic-Prozessor
Method of using fuzzy logic processor in a network and fuzzy logic processor usable in a network

(30) Priorité: 18.02.1997 FR 9701897
(43) Date de publication de la demande: 19.08.1998
(73) Titulaire: STMicroelectronics S.A., 92120 Montrouge (FR)
(72) Inventeur: Le Van Suu, Maurice, 75116 Paris (FR)
(74) Mandataire: Ballot, Paul

(56) Documents cités:
- EP-A- 0 513 829
- EP-A- 0 729 255
- JOSSERAN J -F ET AL: "FUZZY COMPONENT NETWORK FOR INTELLIGENT MEASUREMENT AND CONTROL" IEEE TRANSACTIONS ON FUZZY SYSTEMS, vol. 4, no. 4, novembre 1996, pages 476-487, XP000635643

## Description

La présente invention a pour objet un procédé d'utilisation en réseau d'un processeur de logique floue ainsi qu'un processeur de logique floue utilisable en réseau. Elle a pour objet de simplifier la relation entre les processeurs de logique floue dont l'usage en mode local est connu, avec des éléments répartis en réseau dont l'utilité est grande.

Quand un système est réalisé avec des éléments répartis en réseau, il est possible de considérer chacun des organes connectés à ce système comme une ressource (un actionneur) ou comme une source d'informations utilisable. On connaît dans le domaine de la domotique différents types de réseaux. Il s'agit notamment des réseaux dits HS (HOME SYSTEM) Batibus, CAN ou autres. Le principe de fonctionnement de ces réseaux réside dans l'utilisation d'un protocole. Chaque message qui est transmis sur le réseau comporte un préambule, un en-tête, une adresse source, une adresse destination, un registre de commande, des données, et enfin, éventuellement, un acquit ou un champ de correction d'erreurs.

Le préambule comporte en général une indication relative à la présence du début du message. Cette indication qui sert surtout de synchronisation dite "START" peut prendre diverses formes. Par exemple, dans les bus à quatre fils où deux fils servent à la transmission des données et deux autres fils servent à la transmission d'un signal d'horloge et de l'alimentation électrique, une indication START est détectée par une transition sur les deux fils de données quand l'horloge est à un niveau bas. Dans les circuits à courant porteur, il peut s'agir d'un signal à une fréquence de modulation typique. D'autres conventions s'appliquent pour les différents réseaux.

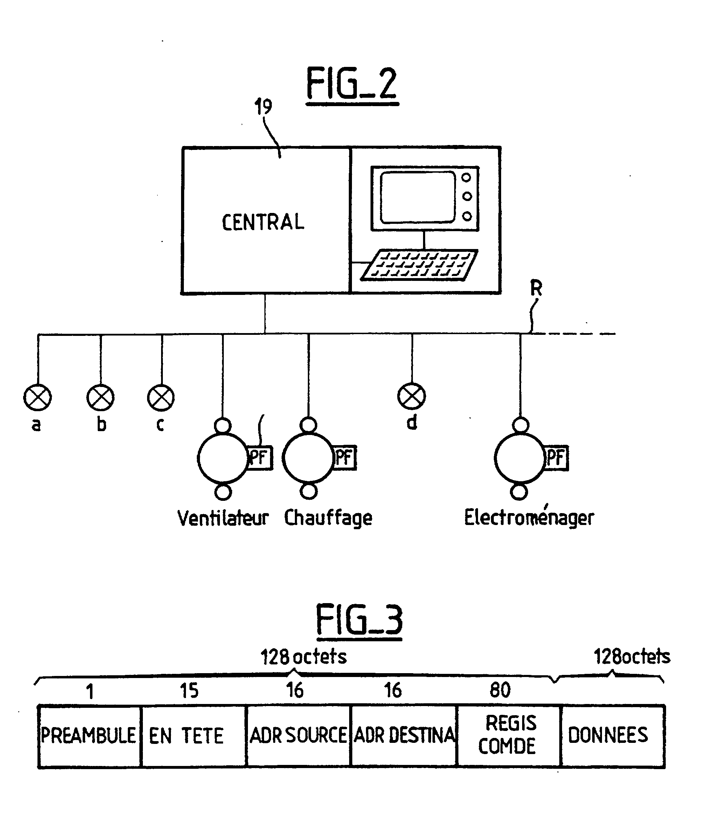

A titre indicatif, la figure 3 montre un exemple de message envoyé sur un réseau. Dans l'exemple arbitraire montré le message comportera une trame de 256 octets. Dans ces 256 octets, 128 premiers octets correspondent à une partie logistique du message. Il est toutefois possible de définir un protocole moins gourmand, avec par exemple seulement onze octets. Dans le cas décrit, il y a un octet pour le préambule, 15 octets pour l'en-tête, 16 octets pour l'adresse source et pour l'adresse destination, et 80 octets pour le registre de commande. Il pourrait n'y avoir qu'un octet pour l'entête et les adresses, et même toute longueur intermédiaire ou supérieure à l'intervalle 1 - 15 octets. Les 128 autres octets servent à transmettre des données. La figure 2 montre schématiquement un réseau R dans lequel trois organes d'activation: un ventilateur, un radiateur de chauffage, et un appareil électroménager sont reliés au réseau. Par ailleurs, des détecteurs ou boutons de commande a à d sont connectés au réseau R. Le réseau R peut être du type paire torsadée, courant porteur, infrarouge, radioélectrique ou autre.

Puisque tous ces organes sont branchés sur le même réseau R, il est nécessaire de munir chacun d'une interface qui est capable d'interpréter les octets de logistique pour extraire des octets de données afin que leur traitement soit effectué. On connaît par la demande de brevet français FR-A-2 690 766 et par la demande de brevet français FR-A-2 699 351, des circuits d'interface dont il faut munir chaque organe, notamment les organes d'action, ventilateur, chauffage et électroménager, pour leur faire comprendre les messages qui sont transmis sur le réseau R.

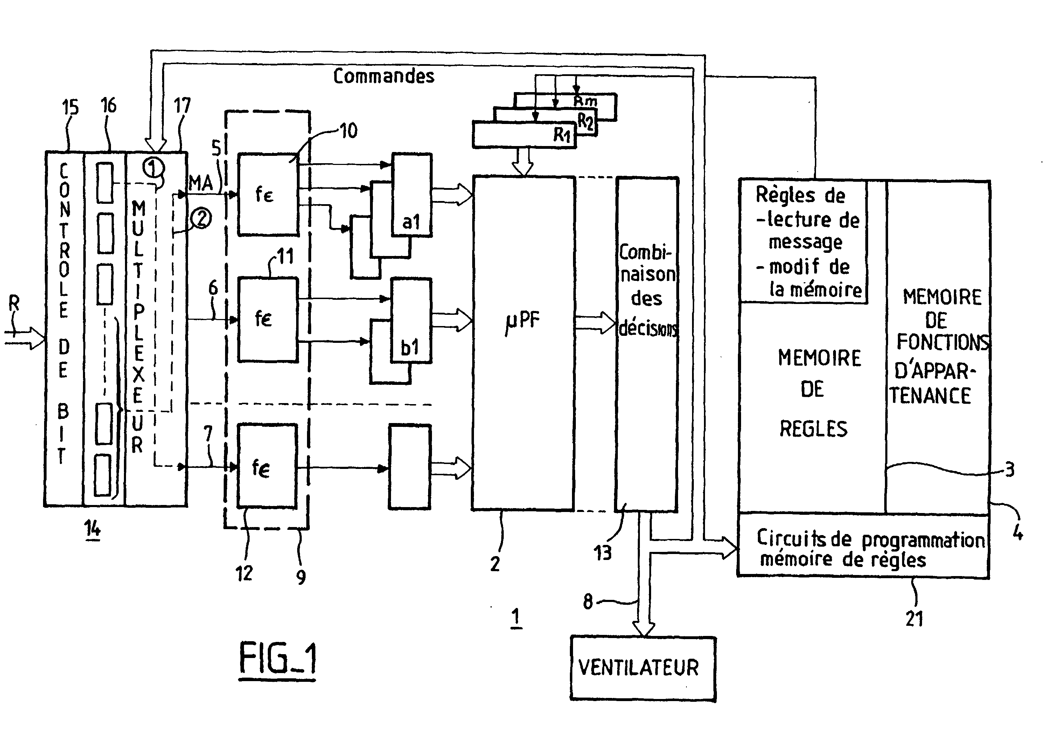

D'autre part, la figure 1 montre schématiquement le fonctionnement d'un processeur de logique floue, ainsi que la présence de circuits anciens qui permettent d'extraire du message transmis sur le réseau R les données utiles à leur traitement par un processeur de logique floue. Le problème présenté par cette technique est un problème de coût. En effet, autant un processeur de logique floue est capable, à peu de frais, de gérer des situations complexes, autant il faut qu'il puisse recevoir d'une manière simple les données qu'il doit traiter. Pour simplifier, un processeur de logique floue actuellement disponible sur le marché, par exemple W A R P 1, W A R P 2 ou W A R P 3, de la société SGS-THOMSON MICROELECTRONICS, comporte au moins 8 entrées pour des données, deux sorties pour les commandes, et le tout pour un prix inférieur à 10 francs, soit 2 dollars. La réalisation d'une interface comme celle décrite dans les demandes de brevet citées ci-dessus, qui est schématiquement représentée par la partie "séquenceur local" et qui est barrée sur la figure 1, a un coût du même ordre. En conséquence, la réalisation d'un processeur flou utilisable en réseau est actuellement deux fois trop chère. En outre elle est complexe à développer.

Dans l'invention, on va résoudre ce problème de coût et la complexité en utilisant un processeur flou pour réaliser les fonctions du séquenceur local. Le séquenceur local doit en pratique être un processeur. Un processeur flou n'est pas normalement destiné, de par son fonctionnement spécifique, à se comporter comme un processeur normal. Ce caractère spécifique sera expliqué plus loin. On rappelle qu'un processeur normal possède un registre d'instructions et un ou des registres d'entrée-sortie de données. Le processeur est constitué d'un arrangement de portes logiques qui reçoivent ces données en entrée. Ces portes sont validées en fonction d'un code instruction présent dans le registre d'instructions. Un tel fonctionnement n'est pas disponible tel quel dans un processeur flou.

Néanmoins, dans l'invention, par une conformation particulière, on arrive à utiliser un processeur flou pour d'abord effectuer l'extraction des données qui doivent ensuite être traitées par ce processeur flou lui-même. En résumé, dans l'invention, le processeur flou procède en deux temps. Dans un premier temps il reçoit le message et le traite de manière à en extraire les données. Dans un deuxième temps, les données extraites sont introduites aux entrées du processeur flou afin qu'il leur applique le traitement connu de logique floue.

L'invention a donc pour objet un procédé d'utilisation en réseau d'un processeur de logique floue, comportant les étapes suivantes:
- enregistrement dans une mémoire de règles du processeur de logique floue, de règles de lecture pour lire des messages transmis par le réseau, et
- quand un message est détecté sur le réseau, décapsulation du message avec les règles de lecture, et introduction des données présentes dans le message sur les entrées de traitement du processeur de logique floue,
- enregistrement dans la mémoire de règles du processeur de logique floue, de règles de traitement spécifiquement adaptees au traitement des opérations de logique floue,
- application de ces règles de traitement aux données introduites sur les entrées de traitement du processeur de logique floue.

L'invention a également pour objet un processeur de logique floue comportant des règles de traitement spécifiquement adaptees au traitement des opérations de logique floue dans une mémoire de règles, des circuits d'entrée de données, et des circuits pour appliquer ces règles en traitement à des données présentées sur ces circuits d'entrée et produire des signaux de décision, caractérisé en ce qu'il comporte en outre:
- une interface interposée entre ces circuits d'entrée et un réseau,
- des règles de lecture enregistrées dans la mémoire de règles pour lire des messages transmis par ce réseau, et
- des circuits pour, dans un premier temps, appliquer ces règles de lecture à un message transmis pour le lire, le décapsuler, et commander en conséquence les circuits d'entrée, et
- des circuits pour, dans un deuxième temps, traiter les données présentes dans ces circuits d'entrée.

D'autres modes de réalisation de l'invention sont spécifiés dans les revendications dépendantes.

L'invention sera mieux comprise à la lecture de la description qui suit et à l'examen des figures qui l'accompagnent. Celles-ci ne sont données qu'à titre indicatif et nullement limitatif de l'invention. Les figures montrent:
- figure 1: un processeur de logique floue conforme à l'invention muni d'un circuit de commande en deux temps;
- figure 2: déjà présentée, une représentation schématique d'un réseau domotique reliant des actionneurs à des organes de détection;
- figure 3: la représentation symbolique, déjà commentée, d'un message transmis sur le réseau de la figure 2.

La figure 1 montre un processeur 1 de logique floue conforme à l'invention. Ce processeur flou 1 comporte une unité 2 de traitement logique, spécifiquement adaptée au traitement des opérations de logique floue. Il comporte en outre une mémoire 3 de règles ainsi qu'une mémoire 4 de fonctions d'appartenance. Il comporte des entrées 5 à 7 pour recevoir des données à traiter. Dans les exemples cités les processeurs connus peuvent avoir 12, 10 ou 8 entrées distinctes. Une fois que le traitement est effectué, l'unité logique 2 produit des signaux de décision disponibles sur un bus 8. Le bus 8 est par exemple directement relié à un organe à commander, par exemple le ventilateur de la figure 2.

On va donner maintenant une explication, très simplifiée, du fonctionnement d'un processeur de logique floue de manière à faire ressortir, par la suite, comment ce fonctionnement est mis à profit pour traiter le cas particulier de la mise en réseau de ce processeur de logique floue. Une donnée à traiter, par exemple une température tA dans une pièce A peut être mesurée et convertie en un signal MA. Le signal MA est introduit sur une des entrées, l'entrée 5, du processeur flou 1. Le branchement est direct (figé) dans l'état de la technique. Dans la mémoire de fonctions d'appartenance 4, il existe des ensemble de tables de correspondance. Par exemple il existe cinq tables de correspondance pour la température dans la pièce A. Selon ces cinq tables, cette température tA sera considérée comme très froide, froide, normale, chaude ou très chaude, avec un vraisemblance quantifiée entre 0 et 1. Une table parmi ces cinq tables, par exemple la table normale, comportera une correspondance avec une vraisemblance de 1 (température normale) si la valeur tA est une température comprise entre 19° et 21°. Entre 16° et 19° et entre 24° et 21°, la vraisemblance évoluera de 0 à 1. En-deça et au-delà de ces valeurs, on considérera que la température n'est pas normale: le coefficient de vraisemblance à la température normale sera nul. En conséquence, pour une valeur MA de température mesurée dans la pièce A, les cinq tables-fonctions d'appartenance évoquées ci-dessus donneront cinq valeurs. Il suffit de provoquer cinq lectures des cinq tables différentes pour connaître les cinq coefficients d'appartenance.

Cette opération de lecture multiple de tables est schématisée sur la figure 1 par un organe 9. Elle est spécifique pour un processeur flou. L'organe 9 qui en pratique est un circuit de lecture comporte des sous circuits 10 à 12 pour lire le lot des tables, le lot des fonctions d'appartenance qui correspondent aux données qui sont introduites sur les entrées 5 à 7. Selon ce qui vient d'être dit, l'introduction du signal MA dans l'organe 9 provoquera automatiquement l'élaboration de cinq coefficients d'appartenance a1, a2, - a5. Il peut en être de même pour un autre signal d'un autre capteur situé dans une autre pièce: la pièce B. Les coefficients correspondants a1 - a5, b1, b2 sont introduits sur les entrées de données de l'unité logique 2. Ce fonctionnement automatique est l'un des fonctionnements propres à un processeur de logique floue, on ne peut y déroger. La dernière introduction est comparable quant à elle à l'introduction des données sur un registre de données d'un processeur classique.

Les règles mémorisées dans la mémoire de règles sont du type:
si MA appartient à la fonction d'appartenance 1 et si MB appartient à la fonction d'appartenance 1 et si ..., alors la décision à produire vaudra ... .

Il y a plusieurs règles de ce type qui sont enregistrées dans la mémoire 3. Au moment du traitement l'unité 2 passe en revue toutes les règles et les prend en compte. Par exemple, la température dans la pièce A étant normale, son coefficient d'appartenance à la fonction d'appartenance très froide sera nul: a1 sera nul (par conséquent toutes les règles impliquées par a1 seront écartées). Les autres règles, celles impliquées par des coefficients d'appartenance différents de 0, conduiront à des signaux élémentaires de décision. Les signaux élémentaires de décision sont généralement contenus dans les règles elles-mêmes. Dans un organe 13 de combinaison des décisions, les décisions élémentaires sont combinées entre elles pour produire le signal qui est mis en place sur le bus 8. Le passage en revue de toutes les règles et l'élaboration des décisions sont un autre fonctionnement typique (et figé) d'un processeur de logique floue.

Une combinaison qui est la plus courante consiste à faire la moyenne des signaux élémentaires de décision édités pour toutes les règles qui ont eu une répercussion. Le passage en revue de toutes les règles revient à charger simultanément ou successivement dans le "registre instructions" du processeur flou toutes règles R1, R2, ... Rm contenues dans la mémoire 3. On notera de plus que la structure des portes logiques du circuit 2 est bien différente d'une structure classique du fait de l'élaboration des signaux élémentaires de décision qui nécessite des opérations spécifiques. Cette explication est schématique mais elle permet de comprendre le fonctionnement spécialisé d'un processeur de logique floue.

Dans l'invention, pour pouvoir connecter les entrées 5 à 7 du processeur flou 1 au réseau R, on interpose un multiplexeur 14. Dans un exemple, ce multiplexeur 14 comprend un circuit 15 contrôleur de bits, un ensemble 16 de registres pour mémoriser tout ou partie des octets d'un message reçu, par exemple tous les octets du message apparaissant sur la figure 3. Le contrôleur de bits 15 fait l'interface entre le réseau R et les registres 16. Il comporte tous les démodulateurs nécessaires. Le multiplexeur 14 comporte en outre un circuit d'aiguillage 17 dont le rôle est de mettre sur les entrées 5 à 7 du processeur 1 les données adéquates. Les entrées 5 à 7 sont représentées comme des fils uniques mais elle peuvent bien entendu être des bus, la liaison pouvant être parallèle au lieu d'être série.

Dans l'état de la technique, le fonctionnement du circuit d'aiguillage 17 est commandé par un séquenceur local 18 dont on a expliqué qu'en pratique il devait comporter un processeur, finalement assez complexe, et dont on veut se passer. Le séquenceur local était relié au bus R, ou aux registres 16, et devait orienter la transmission, par une lecture du message reçu, dans les registres 16.

Dans l'invention, on détourne le bus de commande 8 qui achemine les signaux de décision pour l'appliquer sur une entrée de commande du circuit d'aiguillage 17.

Le principe de l'invention est alors le suivant. Le message reçu et mémorisé dans les registres 16 est traité en deux fois. Une première partie du message est envoyée sur une entrée spéciale (cela veut dire une entrée destinée à cela) du processeur flou. Par exemple, cette entrée pourrait être la huitième (ou la première) entrée des huit entrées disponibles d'un processeur flou. On verra par la suite comment cette obligation peut être contournée.

En pratique, au lieu d'utiliser une entrée spéciale, on en utilisera quatre de la façon suivante. Un premier niveau de codage, en pratique ce premier octet, qui correspond au préambule, est introduit sur une première entrée spéciale. Les niveaux de codage suivants, en pratique les octets 16 à 32, qui sont représentatifs de l'adresse source sont introduits sur une seconde entrée spéciale. Les niveaux de codage ou octets 33 à 48 qui sont représentatifs de l'adresse destinations sont appliqués sur une troisième entrée spéciale, et les niveaux de codage ou octets 49 à 128 représentatifs du registre de commande sont appliqués sur la quatrième entrée spéciale.

En variante, il n'y a pas d'entrées spéciales dédiées définitivement au traitement de la partie logistique du message (les 128 premiers octets) mais un traitement effectué dans un premier temps par exemple, par les quatre premières entrées, ces quatre premières entrées reprenant un traitement normal par la suite.

Un signal de préambule comporte normalement un train de quatre zéros suivi de 1010. Ce signal sert à synchroniser le système, notamment le contrôleur de bits 15. L'expression numérique de ce signal est 10. Dans l'invention, on traitera ce signal de préambule en disant que, si le signal reçu sur la première entrée spéciale est compris entre 0 et 32, alors il s'agit d'une transmission. Comme il s'agit de 10 on détecte ainsi la transmission d'un message sur le réseau. Pour le signal transmis sur la deuxième entrée spéciale, si sa valeur est comprise entre 0 et 32 on saura que c'est le capteur A qui envoie sa température. Si cette valeur est comprise entre 33 et 64, c'est le capteur B. Si elle est comprise entre 65 et 96 c'est le capteur C et ainsi de suite. En outre, si cette valeur est comprise entre 222 et 256 on saura qu'il s'agit d'un central de commande 19 (figure 2) qui prend la main sur le système.

Dans l'entrée spéciale 3 on introduit l'adresse destinataire. Dans les règles on vérifie, si la valeur est par exemple comprise entre 128 et 152, qu'il s'agit effectivement du ventilateur et que dans ce cas le processeur flou 20 attaché à ce ventilateur est concerné. Sur la quatrième entrée spéciale, on introduit le signal correspondant au registre de commandes. On choisit par convention que si ce signal est, par exemple, inférieur à 64 la donnée qui suit (les 128 octets qui vont venir) sont représentatifs d'une mesure. On verra plus loin que si cette valeur est supérieure à 64, la donnée qui suit devra être interprétée comme une décision directe.

Autrement dit, l'organe de traitement 9 ou la partie des sous circuits 10 à 12 concernée par les entrées spéciales sollicitées provoquent les lectures de tables et établissent en entrée de l'unité arithmétique 2 les coefficients d'appartenance correspondant. La particularité de l'invention est, au début, que les tables et règles impliquées sont des tables et règles de lecture d'un message du protocole.

S'agissant d'un message envoyé par le détecteur A sur le réseau, ce message, préparé par le détecteur A, comporte l'adresse du ventilateur, et de son processeur flou 20 associé, comme adresse destination. En conséquence, le processeur flou 20 par sa première entrée spéciale vérifiera qu'il s'agit d'une transmission, par sa seconde vérifiera qu'il s'agit du détecteur A, par sa troisième qu'il est directement concerné et par la quatrième que la donnée de mesure à prendre en considération est située dans les 128 octets de fin de message. Dans ces conditions, le premier ordre élaboré par le circuit de décision 13 est un ordre directement appliqué sur les entrées de commande du circuit d'aiguillage 17 afin que les 128 octets de données utiles de message soient ensuite appliqués sur l'entrée 5 du processeur 1. Les deux étapes sont marquées respectivement avec un 1 et un 2 entourés dans le circuit 17. Dans la première étape les premiers octets des registres 16 sont appliqués aux entrées spéciales (ou provisoirement spéciales). Dans le deuxième temps la donnée est traitée. S'il s'était agit du détecteur B, l'entrée 6 aurait été choisie.

Plutôt que de définir une entrée spéciale, on peut décider que les circuits 10 et 11, normalement dévolus au traitement des signaux émanant des capteurs A et B (c'est à dire avec des lectures de tables désignées dans la mémoire 4) fonctionnent en deux temps. Dans une première phase, ils lisent des tables correspondant à la détermination des fonctions d'appartenance des différentes parties logistiques du message, de façon à savoir qui est le destinataire de la donnée mesurée.

Le signal élémentaire de décision d'une règle du type "si-alors" peut être calculé par le circuit 13 par une moyenne, il peut aussi être imposé par la règle elle-même. Ainsi, si les coefficients d'appartenance relatifs à la situation décrite ci-dessus valent tous 1, il peut résulter le passage sur le bus 8 d'un mot de commande compréhensible par le circuit 17 seul, pour paramétrer ce circuit 17. Le mot de commande comporte d'une part l'adresse du multiplexeur 14, et d'autre part les états électriques propres à aiguiller les registres 16 sur l'entrée 5.

Une autre manière de faire consiste à vouloir imposer un fonctionnement obligatoire à partir d'un circuit central 19. Dans ce cas, le message, figure 3, comporte comme adresse source, une valeur propre à faire reconnaître par le processeur flou 2 l'origine du message comme étant ce circuit central. La valeur présente dans le registre de commandes, par exemple supérieure à 64, indique ensuite que les données figurant dans le reste du message (les 128 octets suivants) doivent être appliquées telles quelles, à titre de commande, sur le bus 8 de commande du processeur 1. Ceci aura pour résultat de provoquer un mode forcé.

On va voir maintenant comment d'une part est provoqué ce mode forcé et d'autre part comment on peut l'utiliser pour modifier la mémoire de règles ou la mémoire des fonctions d'appartenance en provoquant l'action de circuits 21 de programmation des mémoires 3 ou 4 reliés au bus 8. Dans le cas général, un processeur de logique floue ne comporte pas de circuits d'écriture. Dans l'invention, il en comporte: ces circuits d'écriture 21 sont par ailleurs commandés par le processeur 1 au moyen de l'unité 2 et du circuit 13 auxquels ils sont reliés, eux aussi, par le bus 8.

Une façon simple de réaliser le transfert d'une donnée admise en entrée à titre de circuit de décision revient à constituer des règles du type
"si donnée x en entrée alors décision = x".

Ainsi, ces règles peuvent, pour un exemple simple avec un mot de commande de quatre bits, être équivalentes à seize règles du type
si 0000 alors 0000
si 0001 alors 0001
si 0010 alors 0010
et ainsi de suite. Un jeu de règles spéciales est prévu dans ce but.

Ainsi, dans la mémoire de règles 3, il existe des règles de traitement (c'est le cas classique), il existe des règles de lecture de message (c'est ce qui a été vu ci-dessus), il existe en plus des règles d'écriture en mémoire 3 ou 4. Ces règles sont chargées dans le processeur 2 au moment où, par le traitement avec les règles de lecture, on reconnaît qu'il s'agit d'écrire. On reconnaît qu'il s'agit d'écrire si la valeur chargée dans la zone registre de commande est adéquate.

De cette façon, une donnée peut être transcrite et exécutée telle quelle. La données des 128 octets restant peut être telle qu'elle comporte l'adresse du circuit d'écriture, les états électriques pour polariser ce circuit d'écriture en écriture, et les adresses et les données à enregistrer en mémoire de règles elles-mêmes. Par exemple, si un mot de commande utile pour l'écriture a une conformation particulière X (avec n bits), on créera une règle "si donnée X en entrée alors sortie égale X", et on créera une fonction d'appartenance, valeur X en entrée, coefficient de vraisemblance égale 1 (et autrement 0).

Ainsi, dans un exemple, le coefficient d'appartenance de la donnée 0000 à la fonction d'appartenance 0000 est 1. Donc quand la donnée 0000 est présente à l'entrée, la fonction d'appartenance 0000 délivre un signal 1 et la règle concernée qui dit que "si fonction d'appartenance 1 = 1 alors l'ordre de sortie vaut 0000", produit un signal de commande 0000. C'est le signal d'écriture voulu.

Lorsque le signal contenu dans la zone registre de commandes implique une exécution immédiate en mode forcé, on peut par ailleurs prévoir d'utiliser à partir de la mémoire 3 de règles, un jeu de règles particulier sans les passer toutes en revue. Il est ainsi possible de prévoir des classes de règles différentes selon qu'on veut traiter une donnée, décapsuler un message, écrire en mémoire ou forcer le fonctionnement d'un actionneur, du ventilateur, ou au contraire provoquer une mémorisation de nouvelles règles, ou de nouvelles fonctions d'appartenance dans la mémoire 3-4 ou autre.

Ainsi, un forçage permanent est obtenu en modifiant les règles alors qu'un forçage temporaire est obtenu en exécutant immédiatement une décision elle-même transmise dans le message. Ceci peut être obtenu avec une règle du type "si donnée appartient à la fonction Y, alors la décision est égale à la valeur contenue dans le registre qui contient la donnée".

## Revendications

1. Procédé d'utilisation, en réseau (R), d'un processeur (1) de logique floue, comportant les étapes suivantes:
- enregistrement dans la mémoire (3) de règles du processeur de logique floue, des règles de traitement specifiquement adaptées au traitement des opérations de logique floue,
- et application de ces règles de traitement aux données introduites sur les entrées de traitement du processeur de logique floue, **caractérisé par** les étapes suivantes
- enregistrement dans une mémoire (3) de règles du processeur de logique floue, des règles de lecture pour lire des messages transmis par le réseau, et
- quand un message est détecté sur le réseau, décapsulation (7) du message avec les règles de lecture, puis introduction (5) des données (128) présentes dans le message sur les entrées de traitement du processeur de logique floue.

2. Procédé selon la revendication 1, **caractérisé en ce qu'**il comporte une étape de commande (8) par le processeur de logique floue d'un multiplexeur (17) d'entrée du processeur de logique floue.

3. Processeur (1) de logique floue comportant des règles de traitement specifiquement adaptées au traitement des opérations de logique floue, dans une mémoire (3) de règles, des circuits (9-12) d'entrée de données, et des circuits (2,13) pour appliquer ces règles en traitement à des données présentées sur ces circuits d'entrée et produire des signaux de décision, **caractérisé en ce qu'**il comporte en outre:
- une interface (14) interposée entre ces circuits d'entrée et un réseau (R),
- des règles de lecture enregistrées dans la mémoire de règles pour lire des messages transmis par ce réseau, et
- des circuits pour, dans un premier temps (1), appliquer ces règles de lecture à un message transmis pour le lire, le décapsuler, et commander (8) en conséquence les circuits d'entrée, et
- des circuits pour, dans un deuxième temps (2), traiter les données présentes dans ces circuits d'entrée.

4. Processeur selon la revendication 3, **caractérisé en ce que** l'interface comporte un multiplexeur (14) commandé par le processeur de logique floue.

5. Processeur selon la revendication 4, **caractérisé en ce que** le multiplexeur comporte un contrôleur (15) de bits et un jeu (16) de registres pour enregistrer le message reçu et traité par le contrôleur de bits.

6. Processeur selon l'une des revendications 3 à 5, **caractérisé en ce qu'**il comporte des circuits (21) pour écrire des règles dans la mémoire de règles.

## Claims

1. Method of using a fuzzy logic processor (1) in a network (R), comprising the following steps:
- recording of the processing rules specifically adapted for processing of the fuzzy logic operations in the memory (3) for rules of the fuzzy logic processor,
- and application of these processing rules to the data introduced at the processing inputs of the fuzzy logic processor, **characterised by** the following steps:
- recording of the reading rules for reading messages transmitted by the network in a memory (3) for rules of the fuzzy logic processor, and
- when a message is detected in the network, opening (7) of the message with the reading rules, then introduction (5) of the data (128) present in the message at the processing inputs of the fuzzy logic processor.

2. Method according to claim 1, **characterised in that** it comprises a control step (8) in which the fuzzy logic processor controls a multiplexer (17) for inputs to the fuzzy logic processor.

3. Fuzzy logic processor (1) comprising processing rules specifically adapted for processing of the fuzzy logic operations in a memory (3) for rules, data input circuits (9-12), and circuits (2, 13) for applying these processing rules to data presented at these input circuits and producing decision signals, **characterised in that** it additionally comprises:
- an interface (14) interposed between these input circuits and a network (R),
- reading rules recorded in the memory for rules for reading messages transmitted by this network, and
- circuits for firstly (1) applying these reading rules to a transmitted message to read it, open it and control (8) the input circuits accordingly, and
- circuits for secondly (2) processing the data present in these input circuits.

4. Processor according to claim 3, **characterised in that** the interface comprises a multiplexer (14) controlled by the fuzzy logic processor.

5. Processor according to claim 4, **characterised in that** the multiplexer comprises a bit controller (15) and a set of registers (16) for recording the message received and processed by the bit controller.

6. Processor according to one of claims 3 to 5, **characterised in that** it comprises circuits (21) for writing rules into the memory for rules.

## Patentansprüche

1. Verfahren zum Verwenden eines Fuzzy-Logik-Prozessors (1) in einem Netzwerk (R), wobei:
- Verarbeitungsregeln, die spezifisch an die Verarbeitung von Fuzzy-Logik-Operationen angepaßt sind, in dem Regelspeicher (3) des Fuzzy-Logik-Prozessors gespeichert werden
- und diese Verarbeitungsregeln auf die an den Verarbeitungseingängen des Fuzzy-Logik-Prozessors eingegebenen Daten angewendet werden, **dadurch gekennzeichnet, daß**
- Leseregeln zum Lesen von durch das Netzwerk übertragenen Nachrichten in einem Regelspeicher (3) des Fuzzy-Logik-Prozessors gespeichert werden und,
- sobald eine Nachricht in dem Netzwerk erfaßt wird, die Nachricht mit den Leseregeln geöffnet (7) wird und dann in der Nachricht vorliegende Daten (128) über die Verarbeitungseingänge des Fuzzy-Logik-Prozessors eingegeben werden.

2. Verfahren nach Anspruch 1, **gekennzeichnet durch** einen Schritt zum Steuern (8) eines Eingangs-Multiplexers (17) des Fuzzy-Logik-Prozessors **durch** den Fuzzy-Logik-Prozessor.

3. Fuzzy-Logik-Prozessor mit spezifisch an die Verarbeitung von Fuzzy-Logik-Operationen angepassten Verarbeitungsregeln in einem Regelspeicher (3), Dateneingangsschaltungen (9 - 12) und Schaltungen (2, 13) zum Anwenden dieser Verarbeitungsregeln auf an diesen Eingangsschaltungen vorliegenden Daten und zum Erzeugen von Entscheidungssignalen, **dadurch gekennzeichnet, daß** er außerdem umfaßt:
- eine Schnittstelle (14), die zwischen den Eingangsschaltungen und einem Netzwerk (R) liegt,
- in dem Regelspeicher gespeicherte Leseregeln zum Lesen von durch dieses Netzwerk übertragenen Nachrichten und
- Schaltungen zum Anwenden dieser Leseregeln auf eine übertragene Nachricht zu einem ersten Zeitpunkt (1), um sie zu lesen, zu öffnen und folglich die Eingangsschaltungen zu steuern, und
- Schaltungen zum Verarbeiten der in diesen Eingangsschaltungen vorliegenden Daten zu einem zweiten Zeitpunkt (2).

4. Prozessor nach Anspruch 3, **dadurch gekennzeichnet, daß** die Schnittstelle einen Multiplexer (14) umfaßt, der von dem Fuzzy-Logik-Prozessor gesteuert ist.

5. Prozessor nach Anspruch 4, **dadurch gekennzeichnet, daß** der Multiplexer einen Bitregler (15) und ein Registerfeld (16) umfaßt, um die empfangene und von dem Bitregler verarbeitete Nachricht zu speichern.

6. Prozessor nach einem der Ansprüche 3 bis 5, **dadurch gekennzeichnet, daß** er Schaltungen (21) zum Schreiben von Regeln in den Regelspeicher umfaßt.
